# EUROPEAN PATENT SPECIFICATION

(11) **EP 3 022 699 B1**
(45) Date of publication and mention of the grant of the patent: **28.03.2018**
(21) Application number: 14826316.3
(22) Date of filing: 15.07.2014
(51) Int. Cl.: G06Q 20/36, G06Q 20/32

(54) **SYSTEMS, METHODS, AND COMPUTER PROGRAM PRODUCTS FOR MODIFYING AND DELETING DATA FROM A MOBILE DEVICE**
SYSTEME, VERFAHREN UND COMPUTERPROGRAMMPRODUKTE ZUM VERÄNDERN UND LÖSCHEN VON DATEN AUS EINER MOBILEN VORRICHTUNG
SYSTÈMES, PROCÉDÉS ET PRODUITS PROGRAMMES D'ORDINATEUR POUR MODIFIER ET EFFACER DES DONNÉES D'UN DISPOSITIF MOBILE

(30) Priority: 17.07.2013 US 201361847227 P
(43) Date of publication of application: 25.05.2016
(73) Proprietor: Google LLC, Mountain View, CA 94043 (US)
(72) Inventor: STRICKLER, Todd A., Rockville, MD 20850 (US); NADRA, Hani, Dallas, TX 75204 (US)
(74) Representative: Maikowski & Ninnemann Patentanwälte Partnerschaft mbB
(86) International application number: PCT/US2014/046664
(87) International publication number: WO 2015/009704

(56) References cited:
- WO-A1-2008/083487
- US-A1- 2011 145 210
- US-A1- 2012 210 131
- US-A1- 2013 124 638
- US-B2- 8 171 171
- US-B2- 8 244 837

## Description

### BACKGROUND

### Field

The present invention generally relates to managing sets of data in a mobile communications environment. More particularly, the present invention relates to systems, methods, and computer program products for modifying and/or deleting sets of data from a mobile device.

### Related Art

Certain types of data can be communicated physically, e.g. via postal mail, or electronically, e.g. SMS or email. However, such traditional channels have limited effectiveness. For example, data sent via physical mail or email tends to be overlooked or discarded. Furthermore, modification or deletion of the data sent via these traditional channels is problematic because the data is inaccessible to the sender once the data has been delivered. Thus, the original data cannot be modified or deleted without sending a further communication, and the recipient of the original data must affirmatively dispose of the original communication for it to be removed.

This is of particular relevance in a mobile communications environment such as mobile commerce. Service providers, such as merchants, provide offers to consumers via channels such as physical mail or email. For example, a merchant could send coupons via mail for a particular good or service, or coupons for a percentage discount. In another example, a merchant could email coupons to consumers who have provided an email address to the merchant.

However, such traditional channels for providing service provider offers have limited effectiveness. For example, mass communications sent via physical mail or email tend to be overlooked or discarded by consumers, and thus do not reach the intended audience. In fact, such mass communications can have a negative effect on a merchant's reputation. In addition, even if a consumer wishes to receive the offer, the redemption process is often inconvenient. For example, the consumer may have to search through email and print the offer or bring physical mail to the merchant's location.

Another challenge involves the modification and revocation of the offers. A merchant who wishes to modify or revoke an already sent offer via the traditional channels is confronted with limitations of access to the sent offer. For example, if the offer was sent by email, and the merchant wishes to modify terms of the offer, the merchant is unable to access the consumer's email to modify the terms of the offer. Similarly, if the offer was physically mailed to the consumer, the merchant cannot modify the terms of that particular physical offer. In each of these scenarios, the merchant must expend additional resources to send a new modified offer with notice that the old offer is no longer valid, either by email or by physical mail.

However, the sending of a second offer promulgates further confusion. As explained above, mass communications tend to be overlooked or discarded by consumers, and the consumers may often not receive the modified offer (or notification that an offer has been revoked). Complications may arise where the consumer overlooks or discards the modified offer or revocation notice because the consumer may try to use the initial offer and it may not be redeemable. This leads to customer frustration against the merchant and may adversely affect the merchant's reputation. Furthermore, the modification or revocation of an offer by sending additional email or physical mail is off-putting to the consumer, and can also have a negative impact on a merchant's reputation. Documents WO 2008/083487 A1 (OZ COMM INC [CA]; LAFLAMME MANUEL [CA]; LEGAULT SYLVAIN [CA]; MAIORANO) 17 July 2008 (2008-07-17) and US 8 244 837 B2 (ANDREW J. STONE ET AL.) 14 August 2012 (2012-08-14) disclose systems for managing data and represent the most relevant prior art.

It would be preferable to have a system, method and computer program product for modifying or deleting sets of data, which would limit the amount of data sent over a communications network, and the amount of data the receiving system needs to analyze and/or examine. Additionally, when modifying or deleting sets of data, it would be preferable for the sender to have access to the existing sets of data without the need for creating and sending entirely new sets of data.

### BRIEF DESCRIPTION

The invention is defined in independent claims 1 (system), 4 (method) and 7 (medium).

The present invention provides systems, methods, and computer program products for modifying sets of data on the memory of a mobile device..

In one embodiment, a system for managing sets of data includes at least one memory, an interface, and at least one processor communicatively coupled to the memory and the interface. Data set identifiers (IDs) corresponding to sets of data are stored in the memory. A change request is received via the interface to modify or delete one or more sets of data stored in the memory. The change request includes the data set ID of the set of data requested to be changed. The processor queries the memory for a set of data corresponding to the data set ID and processes the change request.

The change request can be either a request to modify an existing set of data or a request to delete an existing set of data. In the request to modify an existing set of data, change attributes are included in the change request. The processor also identifies based on the data set ID one or more mobile devices on which the existing set of data is stored. In accordance with the change request instructions, the processor modifies existing data attributes associated with the existing set of data with change attributes included in the change request. The processor identifies mobile devices on which the existing set of data is stored and transmits the modified set of data to the mobile devices. In the request to delete an existing set of data, the processor identifies the one or more mobile devices on which the set of data is stored and transmits a request to the mobile devices to delete the existing set of data from the mobile devices.

In another embodiment, a method for changing sets of data includes: receiving from a service provider system via an interface a change request including at least a data set ID associated with an existing set of data and instructions either to modify one or more existing data attributes associated with one or more existing sets of data stored on a memory, or alternatively, instructions to delete one of the existing sets of data stored on the memory; querying the memory for a set of data among the existing sets of data having a data set ID matching the data set ID included in the change request; and processing the change request in accordance with the instructions.

If the change request is a request to modify an existing set of data, the processing of the change request comprises the steps of: modifying the existing data attributes with the change attributes included in the change request; identifying, based on the data set ID included in the change request, one or more mobile devices on which the existing set of data is stored; and transmitting a modified set of data to the one or more mobile devices.

If the change request is a request to delete an existing set of data, the processing of the change request comprises the steps of: identifying, based on the data set ID included in the change request, one or more mobile devices on which the existing set of data is stored; and transmitting to the one or more mobile devices a request to delete the existing set of data from the mobile device.

In another embodiment, a non-transitory computer-readable medium has stored thereon sequences of instructions for causing one or more processors to: receive from a service provider system via an interface a change request including at least a data set ID associated with an existing set of data and instructions either to modify one or more existing data attributes associated with one or more existing sets of data stored on a memory, or alternatively instructions to delete one of the existing sets of data stored on the memory; query the memory for a set of data among the existing sets of data having a data set ID matching the data set ID included in the change request; and process the change request in accordance with the instructions.

### BRIEF DESCRIPTION OF THE DRAWINGS

The features and advantages of the present invention will become more apparent from the detailed description set forth below when taken in conjunction with the following drawings.
FIG. 1 is a diagram of a system for modifying or deleting sets of data into mobile applications according to an exemplary embodiment.
FIG. 2 is a sequence diagram illustrating a process for changing an existing set of data according to an example embodiment.
FIG. 3 is a sequence diagram illustrating a process for modifying an existing set of data according to an exemplary embodiment.
FIG. 4 is a sequence diagram illustrating a process for modifying an existing set of data according to an exemplary embodiment.
FIG. 5 is a sequence diagram illustrating a process for deleting an existing set of data according to an exemplary embodiment.
FIG. 6 is a sequence diagram illustrating a process for deleting an existing set of data according to an exemplary embodiment.
FIG. 7 is a block diagram of a device for use with various example embodiments of the invention.

### DETAILED DESCRIPTION

### I. Overview

The example embodiments of the invention presented herein are directed to systems, methods, and computer program products for modifying and deleting sets of data from a mobile device. Some of the embodiments are described below in terms of an example system in a mobile commerce environment. This is for convenience only and not intended to limit the application of the present invention. After reading the following description, it will be apparent to one skilled in the relevant art(s) how to implement the following invention in alternative environments, for example, to edit or delete any content (*e.g*., advertisements, loyalty cards) previously delivered and stored on a mobile device.

The term "offer" and/or the plural form of this term are used herein in an exemplary embodiment to refer to a benefit provided by a merchant system to a customer. For example, an offer may be a one-time redeemable coupon for 10% off a particular purchase. The offer is defined by offer "attributes." The term "attributes" is used herein to refer to the data that defines the offer. For example, the benefit (*e.g*., 10% off a particular purchase), the limitations (*e.g*., can only be used on a purchase of $25 or more), the expiration date, and the like are attributes defining the offer. Offers and offer attributes are explained more fully in U.S. Patent Application 13/975,549, entitled "Systems, Methods, and Computer Program Products for Managing Service Provider Offers,"

The term "existing offer" and/or the plural form of this term are used herein in an exemplary embodiment to refer to an offer created by a merchant system and which has already been stored and/or deployed on a mobile device and/or mobile wallet. An existing offer is defined by "existing offer attributes." The term "existing offer attributes" is used herein to refer to the original data that defines the existing offer.

The term "modified set of data" and/or the plural form of this term are used herein to refer to a set of data (*e.g*., existing set of data) that has been altered by a service provider system and which is defined by at least one "change attribute." The term "change attributes" is used herein to refer to attributes that have been altered relative to their corresponding "existing data attributes." A modified set of data may contain both "existing data attributes" and "change attributes," for example, in a case where only a portion of the "existing attributes" have been altered. The "existing attributes" are those attributes that remain unchanged even though a portion of the set of data has been modified with the "change attributes."

In an exemplary embodiment, the "modified set of data" may be a "modified offer." The term "modified offer" and/or the plural form of this term are used herein to refer to an offer (*e.g*., existing offer) that has been altered by a merchant system and which is defined by at least one "change attribute."

The term "change" and/or the plural form of this term are used herein to refer to any alteration of an existing set of data. As used herein, a change may be either a modification (*i.e*., altering attributes of a set of data), or a deletion.

Generally, systems, methods, and computer program products are provided for modifying and deleting existing sets of data. Prior to their modification or deletion, the existing sets of data have been sent to (*e.g*., delivered, downloaded, uploaded), and are stored on, mobile devices. Service provider systems, in turn, may request to modify or delete the existing sets of data it has previously transmitted to the mobile devices. In an exemplary embodiment, the set of data may be a merchant offer.

Particularly, a change request is input by a service provider system via an interface to modify or delete an existing set of data. A mobile commerce platform receives the change request and identifies the set of data associated with the change request. If the change request is one to modify an existing set of data, the mobile commerce platform modifies the set of data in accordance with instructions sent in the change request and transmits the modified set of data to mobile devices on which the existing set of data is stored. If the change request is one to delete an existing set of data, the mobile commerce platform transmits a request to the mobile devices on which the existing set of data is stored to delete the existing set of data. As explained above, the set of data may be a merchant offer, and the change request may be a request to modify or delete the existing merchant offer.

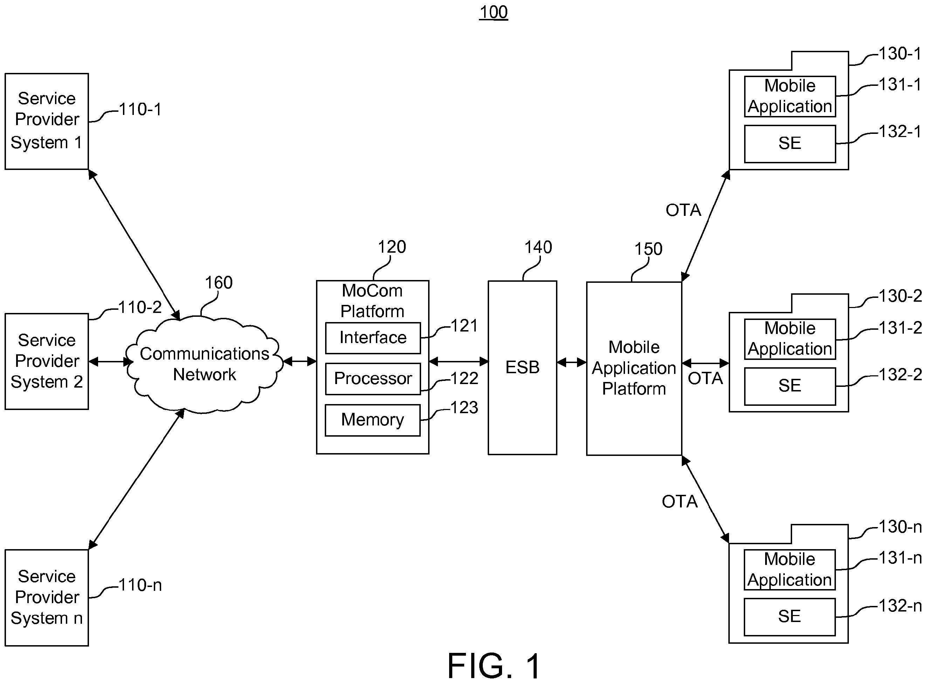

The features discussed above are described in further detail below, with reference to FIGs. 1-7.

### II. System

FIG. 1 is a diagram of a system 100 for providing modified sets of data to, or deleting sets of data from, mobile applications according to an exemplary embodiment. As shown in FIG. 1, system 100 includes service provider systems 110-1, 110-2, ..., 110-n (collectively "110"), a mobile commerce (MoCom) platform 120, enterprise service bus 140, mobile application platform 150, and mobile devices 130-1, 130-2, ..., 130-n (collectively "130").

In an exemplary embodiment, the system 100 may be one for providing modified offers to, or deleting offers from, mobile wallet applications stored on mobile devices. In this particular case, the service provider systems 110 may be merchant systems, and the mobile application platform 150 may be a mobile wallet platform. The system will be described according to this exemplary embodiment.

Each mobile device 130 may be, for example, a cellular phone, table, or the like, and includes a respective mobile wallet application (*i.e.,* mobile wallet 131-1, 131-2, ..., 131-n (collectively "131")) and a secure element (*i.e*., SE 132-1, 132-2, ..., 132-n (collectively "132")).

In addition, although not illustrated in FIG. 1, each mobile device 130 includes a processor, memory, contactless frontend (CLF), baseband modem, and user interface such as a display. A baseband modem is a digital modem that is used for mobile network communications. A CLF is circuitry which handles the analog aspect of contactless or NFC communications and the communication protocol layers of a contactless transmission link. A CLF also is used to exchange data between a proximity or near field communications (NFC) contactless reader and the secure elements 132 contained in each mobile device 130, for example, during the execution of a mobile commerce contactless transaction.

Each of the secure elements 132 may be implemented as a Universal Integrated Circuit Card, embedded SE card, secure micro secure digital card, and the like. Each secure element 132 is generally considered secure because it is a self-contained system, including dedicated memory, and is protected by hardware and software hardening techniques that are verified by independent testing. The secure element need not be arranged as hardware within the mobile device 130. The secure element may be implemented as a "virtual" secure element. The virtual secure element may be maintained outside the mobile device on any memory accessible to the mobile, including but not limited to, for example, a remote server or computer, in the cloud, and the like.

Each secure element 132 may include (*i.e.,* have stored thereon) a commerce applet which is capable of operating as a storage container and interface for offer data management, and may be used to redeem an offer during a contactless transaction. Offer data can also, and/or alternatively, be stored on the memory of the mobile device 130. Each secure element 132 communicates (*e.g*., via the CLF) offer data to a NFC contactless reader using ISO 7816 commands over the NFC ISO 14443 protocol.

Mobile device 130 further includes a corresponding mobile wallet application ("mobile wallet") 131 having instructions which, when executed by the processor of a mobile device, cause the mobile device to act as an instrument. For example, the mobile device 130 may act as an instrument for processing transactions such as contactless commerce and/or payment transactions.

Moreover, each mobile device 130 is communicatively coupled to a mobile wallet platform 150. The mobile wallet platform 150 may include one or more servers for storing offer data, and it is configured to manage (*i.e.,* transmit, receive, request, process) offers and related data.

It should be understood that other communications between the aforementioned devices may include communications with or through other intervening systems, hardware, and/or software, and such communications may include receiving, transferring, and/or managing data.

Mobile devices 130 are communicatively coupled to a mobile wallet platform 150, which in turn is communicatively coupled to a mobile commerce (MoCom) platform 120 via an ESB 140. U.S. Patent Application No. 13/848,962, entitled "Systems, Methods, and Computer Program Products for Provisioning Payment Accounts into Mobile Wallets and Managing Events," describes communications with mobile wallets using an ESB.

The MoCom platform 120 is further communicatively coupled to one or more service provider systems 110. A service provider system may be a merchant system, which is a system managed by a merchant (*e.g*., business, retailer, and the like) for example, for managing mobile commerce transactions and for creating, processing, and managing (*e.g*., editing, withdrawing) merchant offers.

The MoCom platform 120 may include a processor 122 and one or more servers (*i.e*., memory 123) for: storing and managing data related to mobile commerce transactions (*e.g*., offer data, loyalty data, rewards data) and/or service provider data (*i.e*., information related to service provider systems 110); and rules and/or means for processing redeemed offers, distributing offers to mobile wallets, and the like. The MoCom platform 120 may further include an interface 121, which may be an application programming interface (API) and the like. A service provider system 110 may access the interface 121 via a communications network 160 in order to create an offer, or modify or delete an existing offer.

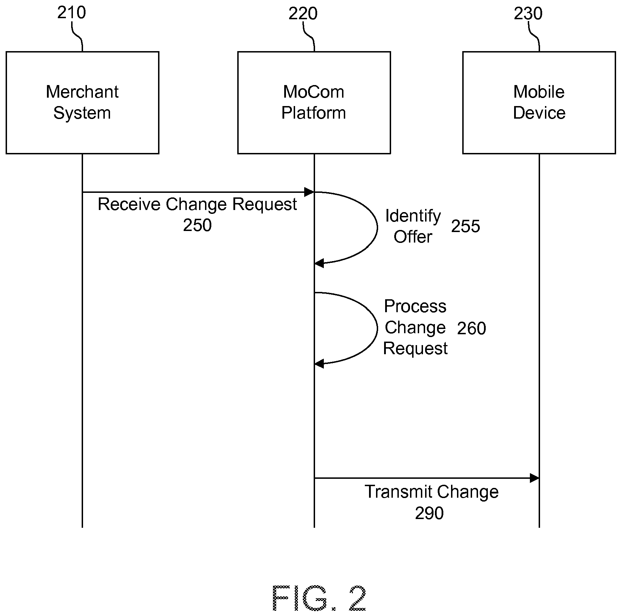

In particular, a service provider system 110 may access the MoCom interface 121 to submit a change request to either modify or delete an offer stored on the MoCom platform 120. The MoCom platform 120 receives and processes the change request. The MoCom platform 120 either sends a modified offer, or alternatively, an instruction to delete an offer, to the mobile wallet platform 150, which is then in turn sent to the mobile device 130. This change request to modify or delete an offer from a mobile device is discussed in further detail below with reference to FIGs. 2-6.

### III. Process

A merchant system (*e.g*., FIG. 1, service provider system 110) may access a MoCom interface (*e.g*., FIG. 1, MoCom Platform interface 121) via a communications network (*e.g*., FIG. 1, communications network 160). The interface allows a merchant system to view and/or access any offer associated with that merchant system. The interface may, for example, provide an offers menu, screen, display, or the like (hereinafter referred to as "menu") in which the merchant system can view its existing offers organized by certain criteria (*e.g*., by date created, alphabetically by title, etc.). There may also be provided on the interface any options to manage offers, including options to create a new offer, search existing offers, show expired offers, view/edit one or more existing offers, and delete one or more existing offers.

In one exemplary embodiment, the MoCom platform (*e.g*., FIG. 1, MoCom platform 120) provides an API by which the merchant system may create a new offer by selecting the create new offer option in the offers menu. A create new offer submenu opens when this option is selected by the merchant system, and the merchant system may enter attributes defining the new offer. Examples of attributes may include, but are not limited to, a logo, merchant ID, description, name, offer code, creation date, expiration date, terms and conditions of the offer, and the like. Some of these attributes, for example, merchant ID and creation date, may automatically be defined by the MoCom platform upon opening the create new offer submenu.

A merchant ID is a unique identifier corresponding to a merchant system. The merchant ID indicates the merchant system eligible or capable to accept and apply the offer when used (*i.e*., redeemed) in a contactless transaction. An offer name is a unique caption or label assigned to the offer, by which the offer can be identified. A creation date is the date on which the offer is created by a merchant system, and may be used to calculate when the offer becomes eligible to be used. An expiration date is the last date on which the offer may be used. The terms and conditions of the offer (*i.e*., offer content) include information indicating the benefits of the offer (*e.g*., 20% off the purchase), the limitations on the offer (*e.g*., minimum purchase requirement of $25), and the like. In particular, the terms and conditions may include an offer title, offer description, offer expiration, offer image, associated barcode, and any other terms, conditions, and the like related to the offer. Not all of the aforementioned attributes will be required in every circumstance.

The MoCom platform receives the offer and associated attributes from the merchant system via the interface and reviews the received offer to ensure that it is complete. The MoCom platform will compare the offer attributes against a predetermined set of requirements to ensure the necessary attributes are defined. For example, the MoCom platform may require a title, offer conditions, and expiration date. The merchant system may define more attributes than those required so long as the required attributes are also provided.

Accordingly, the MoCom platform analyzes the received attributes against the predetermined set of requirements. If the merchant system fails to include an attribute as required, the MoCom platform may reject creation of the offer. The MoCom platform may indicate which information was not provided by the merchant system but is necessary to complete the creation of the offer. If the required attributes are defined, the MoCom platform creates the new offer and stores the offer and its defining attributes, as well as any other data received from the merchant system, on the MoCom server (*i.e.,* memory) (*e.g*., FIG. 1, MoCom platform memory 123). The MoCom platform may assign an offer ID to the newly created offer, as well as a merchant ID associated with the merchant system that created the offer. These IDs are also stored on the MoCom platform and are associated with the new offer. Furthermore, once created, the MoCom platform adds the newly created offer to the list of existing offers displayed on offers menu of the MoCom interface.

The offer is distributed from the MoCom platform to a mobile wallet platform (*e.g*., FIG. 1, Mobile application platform 150), which in turn sends the offer to mobile devices (*e.g*., FIG. 1, mobile device 130). This system and method of distributing offers to mobile devices is described in more detail in U.S. Patent Application No. 13/948,854, entitled "Systems, Methods, and Computer Program Products for Providing Offers to Mobile Wallets," and in U.S. Patent Application No. 13/975,549, entitled "Systems, Methods, and Computer Program Products for Managing Service Provider Offers,"

The MoCom platform may store information related to the mobile devices to which it distributed the offer. The stored information may include a mobile device identifier ("mobile device ID") (*e.g*., mobile device number (MDN)) identifying the mobile device, a mobile wallet identifier ("mobile wallet ID") identifying the particular mobile wallet application to which the offer was distributed, a list of events associated with the offer, and the like. The list of events may be events associated with the distribution of the offer, such as a timestamp of when the offer was distributed to the mobile device, or a timestamp of when the mobile device saved and/or deleted the offer to or from the mobile device memory. Additionally, the list of events may be events associated with transactions involving the offer, such as a timestamp of when the offer was sent to a point-of-sale ("POS") terminal in a contactless transaction, the location of the transaction, and the like. It should be understood that the MoCom platform may store any information related to the distribution of, and transaction associated with, the offer.

The merchant system may search existing offers and/or modify or delete an existing offer. The merchant system may perform these functions via the interface of the MoCom platform.

The search option of the offer menu may allow a merchant system to search existing offers by, for example, offer ID, offer title, offer description, and the like. The show expired offers option allows a merchant system to change the list of offers shown from active existing offers to a list of offers that have since expired or have been revoked. The merchant system may then view the details of one or more expired offers by selecting a single expired offer or by checking multiple expired offers and choosing a "view details" button.

From the offers menu, a merchant system may view the offer attributes of an existing offer by selecting the existing offer. The merchant is directed to a new interface window upon selecting the existing offer. From this window, the merchant system may be given the option to edit or delete the existing offer. For example, a delete offer button may be provided that when selected opens a screen or window asking the merchant system to verify the deletion of the offer. If verified, a change request to delete the existing offer is sent to the MoCom platform.

The merchant system may also have the option to edit the existing offer by changing attributes in the new interface window. The opened window may display existing attributes defining the offer, for example, existing attributes which were stored at the time the offer was created. Some existing offer attributes may not be permitted by the MoCom platform to be edited. For example, attributes that can be edited may include title, expiration date, description, and terms and conditions, while attributes that cannot be edited may include offer ID, and redeemable flag. Whether or not an existing offer attribute may be modified is based on a predetermined set of requirements. Visually, on the interface screen or window, these attributes may be "grayed out" and may not be selectable by the merchant system. In addition, if the merchant system attempts to edit one or more of the existing offer attributes that cannot be edited, the MoCom platform may indicate via a pop-up message, warning signal, and the like, that the attribute may not be changed. If the merchant system desires to modify an offer by changing an existing offer attribute that is not permitted to be changed by the MoCom platform, the merchant system may delete the existing offer and create a new offer with the desired attributes.

The merchant system edits the existing offer attributes capable of being changed by removing the previously entered data and replacing the existing offer attributes with changed values (*i.e*., change attributes). The merchant system may then select an option to confirm the changes made to the existing offer, which in turn sends to the MoCom platform a change request to store the changed attributes on the MoCom platform.

The process for modifying or deleting an existing offer is described in more detail below with reference to FIGs. 2-6.

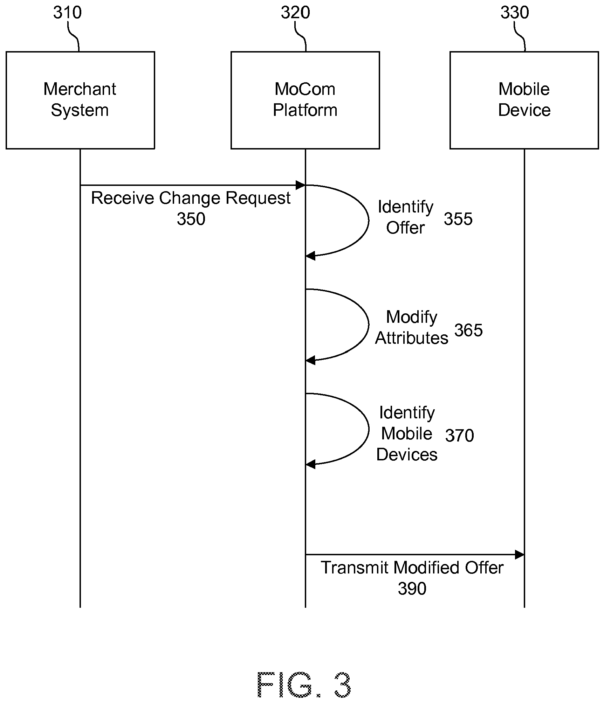

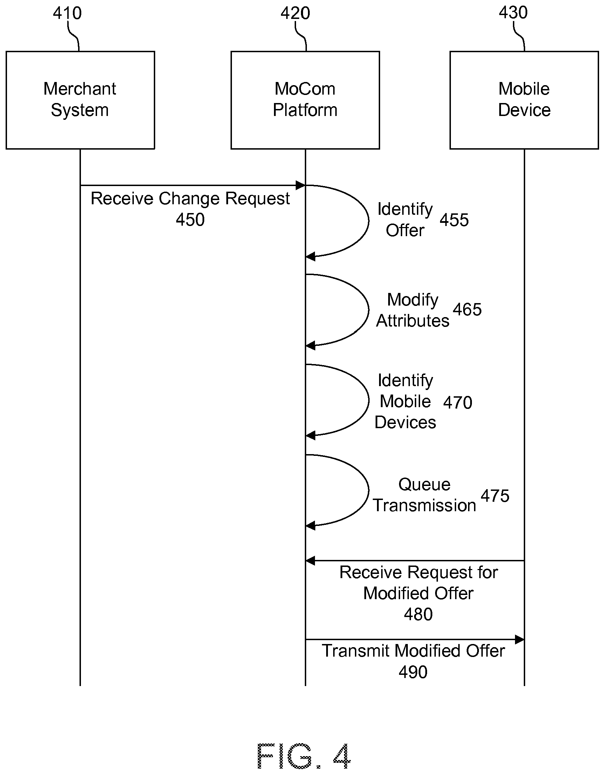

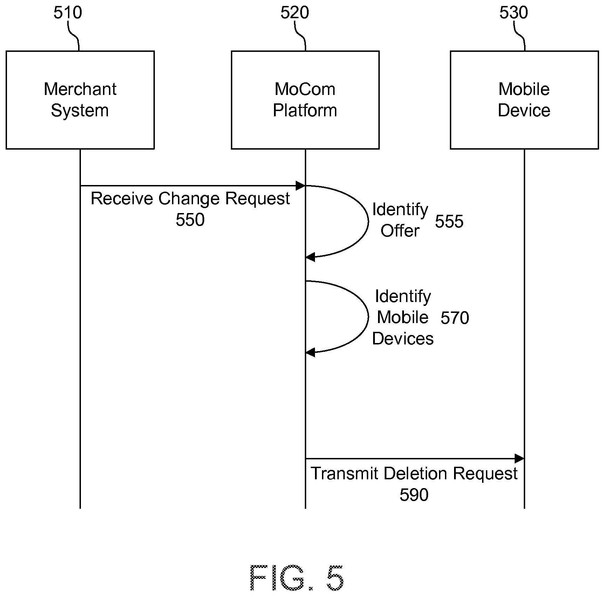

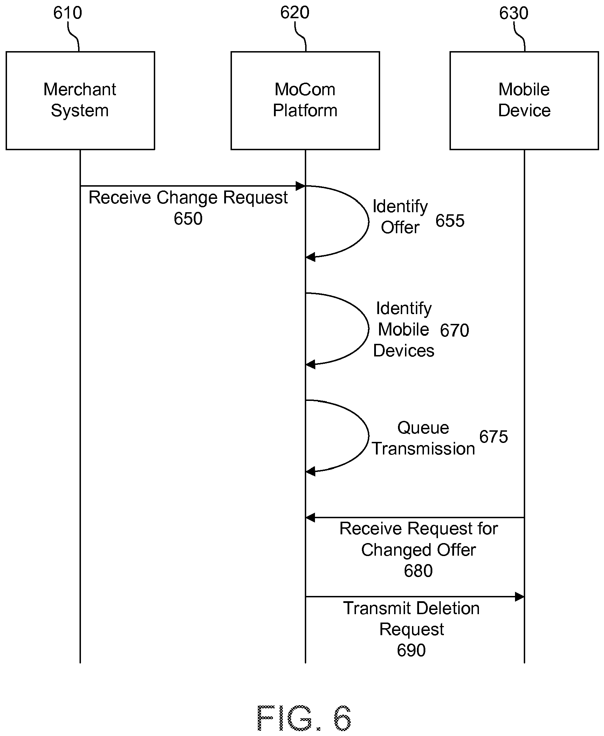

FIG. 2 is a diagram illustrating a process 200 for modifying or deleting an existing offer according to an exemplary embodiment. At step 250, the MoCom platform 220 receives, from a merchant system 210 via the MoCom platform interface, a change request to change an existing offer (*e.g*., an offer previously created, stored on the MoCom platform and distributed to one or more mobile devices). The change request may be a request to modify an existing offer (described in more detail below in connection with FIG. 3 and FIG. 4) or a request to delete an existing offer (described in more detail below in connection with FIG. 5 and FIG. 6), and it includes at least an offer ID identifying which offer the merchant system is requesting to change. Additionally, the change request includes instructions to modify at least one existing offer attribute associated with at least one existing offer stored on the MoCom platform, or alternatively, instructions to delete an existing offer stored on the MoCom platform.

At step 255, the MoCom platform 220 identifies the existing offer associated with or identified in the change request. That is, the MoCom platform 220 receives an offer ID in the change request and queries the MoCom platform for an existing offer having a matching offer ID.

At step 260, the MoCom platform 220 processes the change request in accordance with the instructions included in the change request. The processing of the change request is discussed in further detail below with reference to FIGs. 3-6.

At step 290, the MoCom platform 220 transmits the change to the mobile device. As discussed above, and in further detail below with respect to FIGs. 3-6, the change may either be a modified offer or a request to delete an existing offer.

FIG. 3 is a sequence diagram of a process 300 for modifying an existing offer according to an exemplary embodiment. The MoCom platform 320 receives, at step 350, a change request from a merchant system 310 via the MoCom platform interface to change an existing offer. The MoCom platform 320 identifies the existing offer associated with the change request at step 355.

At step 365, the MoCom platform 320 modifies the existing offer attributes of the existing offer identified at step 355 with the change attributes included in the change request. The MoCom platform 320 stores the change attributes on its memory or associated storage (*e.g*., database, server). In one example embodiment, the MoCom platform 320 does not generate a new offer. Rather, the existing offer becomes a modified offer which includes the existing offer attributes having been modified with the change attributes received at step 350. In other words, the existing offer is referred to as a modified offer once it has been altered using the change attributes. Since a new offer is not created, the MoCom platform 320 may additionally create a record of the modification, associate the record with the offer ID, and store the record on the MoCom platform 320. The record of the modification may include information of the previously existing offer, as well as the attributes that were changed as a result of the MoCom platform 320 processing the change request. The record of the modification may be accessible to the merchant system via the offers menu of the MoCom interface.

At step 370, the MoCom platform 320 identifies mobile devices that have previously received or have stored thereon the existing offer associated with the offer ID identified in the change request. The MoCom platform 320 queries its memory for the offer ID and retrieves information regarding which mobile devices previously received the existing offer. In one embodiment, the mobile devices are associated with mobile device IDs, and the MoCom platform 320 determines which mobile devices have stored thereon the existing offer based on the mobile IDs stored in the memory of the MoCom platform 320 that are associated with the offer ID included in the change request. The mobile device ID may be, for example, the telephone number of the mobile device. Mobile devices need not be identified by their mobile telephone numbers, but may be identified using other information associated with the mobile device.

In one embodiment, the MoCom platform receives information from a mobile device regarding whether or not an offer which was previously received by the mobile device was used in a transaction, was deleted by the mobile device, or otherwise removed from the mobile device. If the previously existing offer was used in a transaction, deleted from the mobile device, or otherwise removed, the MoCom platform may remove that mobile device from the list of identified mobile devices. While in this example the MoCom platform receives information directly from the mobile device, it should be understood that the communication may be with or through other intervening systems, such as through the mobile wallet platform.

At step 390, the MoCom platform 320 transmits the modified offer to the mobile devices 330 identified at step 370. In one embodiment, the modified offer transmitted at step 390 replaces the corresponding existing offer (*i.e*., existing offer with the same offer ID) previously distributed to the mobile device 330. In this case, transmitting the modified offer does not result in two offers in the wallet-the modified offer is stored on the mobile device 330 and the previously distributed existing offer is deleted from the mobile device 330. The MoCom platform 320 may include a notification to the user in the transmission at step 390 indicating that the previously existing offer is replaced by a modified offer. Alternatively, the offer may be replaced without notification.

In another embodiment, at step 390, the MoCom platform 320 transmits the modified offer to the mobile device 330. However, unlike the embodiment just described, the modified offer does not replace the previously existing offer. Rather, the attributes of the existing offer may be refreshed with the attributes associated with the modified offer. That is, the mobile device 330 may compare the existing offer and the transmitted modified offer, and refresh (*i.e.,* alter) the attributes of the existing offer to match those of the received modified offer.

In yet another example embodiment, the MoCom platform 320, at step 390, may not transmit the entire modified offer (*i.e.,* all of the existing attributes including those modified by the change attributes). Instead, prior to transmission, the MoCom platform 320 may compare the existing offer attributes with the modified offer attributes, and in turn, at step 390 the MoCom platform may send only the change attributes with an instruction to the mobile device to change or update the existing offer with the change attributes.

In yet another example embodiment, the mobile device 330 may retain both the previously distributed existing offer and the newly transmitted modified offer. The mobile device 330 may indicate that the previously distributed existing offer is not active and has been replaced by the modified offer. In this situation, a user of the mobile device 330 is informed that the offer has been modified, for example via a user interface of the mobile device 330, and the user is able to view the differences between the previously existing offer and the modified offer.

FIG. 4 is a sequence diagram 400 illustrating the process for transmitting a modified offer to a mobile device, wherein the transmission is triggered by a pull request received from the mobile device.

The MoCom platform 420 receives, at step 450, a change request from a merchant system 410 via the MoCom platform interface to change an existing offer. The MoCom platform 420 identifies the existing offer associated with the change request at step 455. The MoCom platform modifies the attributes of the existing offer, at step 465, and identifies mobile devices that previously received the existing offer, at step 470, in the same manner as described above in steps 365 and 370 of process 300.

At step 475, the MoCom platform queues the transmission of the modified offer. The modified offer is not transmitted to the mobile device automatically upon processing of the change request, but is queued for later transmission. At step 480, the MoCom platform 420 receives a request from a mobile device 430 for changes to existing offers stored on the mobile device. Upon receiving this request, the MoCom platform 420 transmits the modified offer to the mobile device 430 at step 490.

In another example embodiment, the transmission of the offer may be queued at other intervening systems, such as at the mobile wallet platform. In such an example embodiment, the MoCom platform may automatically transmit the modified offer to the mobile wallet platform upon processing the change request. The mobile wallet platform may then queue the transmission of the modified offer to the mobile device. The mobile device sends a request for changes to existing offers stored on the mobile device. For example, this request may occur by instruction from a user of the mobile device, may occur automatically upon opening a mobile wallet application on the mobile device, or may occur automatically upon trying to use the existing offer at a POS terminal. The mobile wallet platform then transmits the modified offer to the mobile device.

FIG. 5 is a sequence diagram 500 illustrating a process for deleting an existing offer from a mobile device according to an exemplary embodiment. The MoCom platform 520 receives, at step 550, a change request from a merchant system 510 via the MoCom platform interface to change an existing offer. The change request received at step 550 is a request to delete an existing offer. The MoCom platform 520 identifies the existing offer associated with the change request at step 555. At step 570, the MoCom platform 520 identifies mobile devices that have previously received the existing offer associated with the offer ID. The MoCom platform 520 queries its memory for the offer ID and retrieves information regarding which mobile devices previously received the existing offer. At step 590, the MoCom platform 520 transmits a deletion request to a mobile device 530 with instructions to delete an existing offer from the mobile device 530. The deletion request may include the offer ID associated with the existing offer. While this process has been described with the MoCom platform directly sending the request to the mobile device, it should be understood that the communication may be with or through other intervening systems, such as through the mobile wallet platform.

The MoCom platform 520 may keep a record of the deleted offer and associated attributes, and may allow a merchant system to access the details of the deleted offer in a deleted offers submenu of the MoCom interface.

FIG. 6 is a sequence diagram 600 illustrating a process for deleting an existing offer from a mobile device, in which the deletion is triggered by a pull request received from the mobile device. The MoCom platform 620 receives, at step 650, a change request from a merchant system 610 via the MoCom platform interface to change an existing offer. In this exemplary embodiment, the change request is a request to delete an existing offer. The MoCom platform 620 identifies the existing offer associated with the change request at step 655. The MoCom platform 620 modifies the and identifies mobile devices that previously received the existing offer, at step 670, in the same manner as described above with regards to process 500.

At step 675, the MoCom platform queues the transmission of a request to delete the existing offer. The request for deletion is not transmitted to the mobile device automatically upon processing of the change request, but is queued for later transmission. At step 680, the MoCom platform 620 receives a request from a mobile device 630 for changes to existing offers stored on the mobile device. Upon receiving this request, the MoCom platform 620 transmits the deletion request to the mobile device 630 at step 690.

In another embodiment, the transmission of the deletion request may be queued at other intervening systems, such as at the mobile wallet platform. In this embodiment, the MoCom platform may automatically transmit the deletion request to the mobile wallet platform upon processing the change request. The mobile wallet platform may then queue the transmission of the request to delete an existing offer to the mobile device. The mobile device sends a request for changes to existing offers stored on the mobile device. For example, this request may occur by instruction from a user of the mobile device, may occur automatically upon opening a mobile wallet application on the mobile device, or may occur automatically upon trying to use the existing offer at a POS terminal. The mobile wallet platform then transmits the deletion request to the mobile device.

In the embodiments described above with reference to FIGs. 3-6, the MoCom platform may receive a confirmation from the mobile device as to whether the existing offer was successfully modified or successfully deleted in accordance with the instructions of the change request. The MoCom platform, upon receiving such a request, may create a change record associated with the offer ID detailing which mobile devices have successfully received the modified offer or deleted the existing offer. The merchant system may access the change record via the MoCom interface.

### IV. Computer Program Product

The example embodiments described above such as, for example, the systems and procedures depicted in or discussed in connection with FIGs. 1-6 or any part or function thereof, may be implemented by using hardware, software or a combination of the two. The implementation may be in one or more computers or other processing systems. While manipulations performed by these example embodiments may have been referred to in terms commonly associated with mental operations performed by a human operator, no human operator is needed to perform any of the operations described herein. In other words, the operations may be completely implemented with machine operations. Useful machines for performing the operation of the example embodiments presented herein include general purpose digital computers or similar devices.

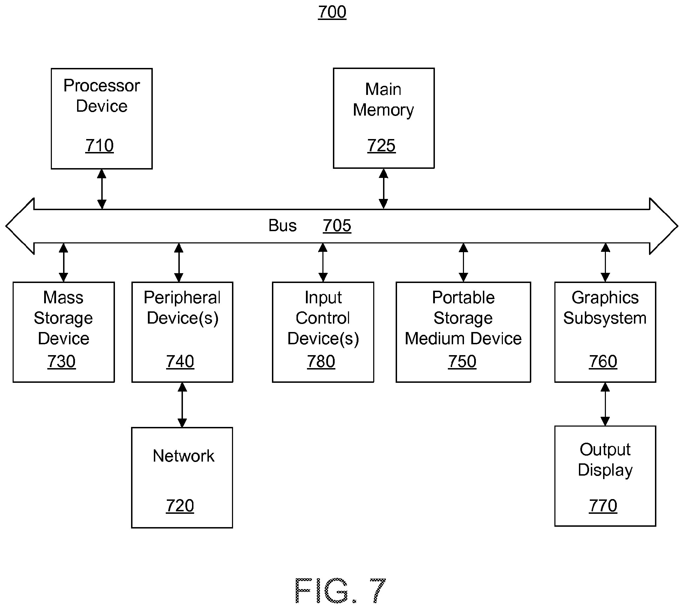

FIG. 7 is a block diagram of a general and/or special purpose computer 700, in accordance with some of the example embodiments of the invention. The computer 700 may be, for example, a user device, a user computer, a client computer and/or a server computer, among other things.

The computer 700 may include without limitation a processor device 710, a main memory 725, and an interconnect bus 705. The processor device 710 may include without limitation a single microprocessor, or may include a plurality of microprocessors for configuring the computer 700 as a multi-processor system. The main memory 725 stores, among other things, instructions and/or data for execution by the processor device 710. The main memory 725 may include banks of dynamic random access memory (DRAM), as well as cache memory.

The computer 700 may further include a mass storage device 730, peripheral device(s) 740, portable storage medium device(s) 750, input control device(s) 780, a graphics subsystem 760, and/or an output display 770. For explanatory purposes, all components in the computer 700 are shown in FIG. 7 as being coupled via the bus 705. However, the computer 700 is not so limited. Devices of the computer 700 may be coupled via one or more data transport means. For example, the processor device 710 and/or the main memory 725 may be coupled via a local microprocessor bus. The mass storage device, 730, peripheral device(s) 740, portable storage medium device(s) 750, and/or graphics subsystem 760 may be coupled via one or more input/output (I/O) buses. The mass storage device 730 may be a nonvolatile storage device for storing data and/or instructions for use by the processor device 710. The mass storage device 730 may be implemented, for example, with a magnetic disk drive or an optical disk drive. In a software embodiment, the mass storage device 730 is configured for loading contents of the mass storage device 730 into the main memory 725.

The portable storage medium device 750 operates in conjunction with a nonvolatile portable storage medium, such as, for example, a compact disc read only memory (CD-ROM), to input and output data and code to and from the computer 700. In some embodiments, the software for storing an internal identifier in metadata may be stored on a portable storage medium, and may be inputted into the computer 700 via the portable storage medium device 750. The peripheral device(s) 740 may include any type of computer support device, such as, for example, an input/output (I/O) interface configured to add additional functionality to the computer 700. For example, the peripheral device(s) 740 may include a network interface card for interfacing the computer 700 with a network 720.

The input control device(s) 780 provide a portion of the user interface for a user of the computer 700. The input control device(s) 780 may include a keypad and/or a cursor control device. The keypad may be configured for inputting alphanumeric characters and/or other key information. The cursor control device may include, for example, a mouse, a trackball, a stylus, and/or cursor direction keys. In order to display textual and graphical information, the computer 700 may include the graphics subsystem 760 and the output display 770. The output display 770 may include a cathode ray tube (CRT) display and/or a liquid crystal display (LCD). The graphics subsystem 760 receives textual and graphical information, and processes the information for output to the output display 770.

Each component of the computer 700 may represent a broad category of a computer component of a general and/or special purpose computer. Components of the computer 700 are not limited to the specific implementations provided here.

Portions of the example embodiments of the invention may be conveniently implemented by using a conventional general purpose computer, a specialized digital computer and/or a microprocessor programmed according to the teachings of the present disclosure, as is apparent to those skilled in the computer art. Appropriate software coding may readily be prepared by skilled programmers based on the teachings of the present disclosure.

Some embodiments may also be implemented by the preparation of application-specific integrated circuits, field programmable gate arrays, or by interconnecting an appropriate network of conventional component circuits.

Some embodiments include a computer program product. The computer program product may be a storage medium or media having instructions stored thereon or therein which can be used to control, or cause, a computer to perform any of the procedures of the example embodiments of the invention. The storage medium may include without limitation a floppy disk, a mini disk, an optical disc, a Blu-ray Disc, a DVD, a CD-ROM, a micro-drive, a magneto-optical disk, a ROM, a RAM, an EPROM, an EEPROM, a DRAM, a VRAM, a flash memory, a flash card, a magnetic card, an optical card, nanosystems, a molecular memory integrated circuit, a RAID, remote data storage/archive/warehousing, and/or any other type of device suitable for storing instructions and/or data.

Stored on any one of the computer readable medium or media, some implementations include software for controlling both the hardware of the general and/or special computer or microprocessor, and for enabling the computer or microprocessor to interact with a human user or other mechanism utilizing the results of the example embodiments of the invention. Such software may include without limitation device drivers, operating systems, and user applications. Ultimately, such computer readable media further include software for performing example aspects of the invention, as described above.

Included in the programming and/or software of the general and/or special purpose computer or microprocessor are software modules for implementing the procedures described above.

While various example embodiments of the invention have been described above, it should be understood that they have been presented by way of example, and not limitation. It is apparent to persons skilled in the relevant art(s) that various changes in form and detail can be made therein. Thus, the invention should not be limited by any of the above described example embodiments, but should be defined only in accordance with the following claims

In addition, it should be understood that the figures are presented for example purposes only. The architecture of the example embodiments presented herein is sufficiently flexible and configurable, such that it may be utilized and navigated in ways other than that shown in the accompanying figures. Further, the purpose of the Abstract is to enable the U.S. Patent and Trademark Office and the public generally, and especially the scientists, engineers and practitioners in the art who are not familiar with patent or legal terms or phraseology, to determine quickly from a cursory inspection the nature and essence of the technical disclosure of the application. The Abstract is not intended to be limiting as to the scope of the example embodiments presented herein in any way.

## Claims

1. A system for managing data, the system (100) comprising:
a memory (123) operable to store one or more existing sets of data, each existing set of data being associated with one or more existing data attributes and a corresponding data set identifier
an interface (121) for communicating with one or more service provider systems (110-1, 110-2, ..., 110-n, 210, 310, 410, 510, 610), and
a processor (122) communicatively coupled to the memory (123) and the interface (121), the processor being operable to:
receive, from the one or more service provider systems (110-1, 110-2,..., 110-n, 210, 310, 410, 510, 610) via the interface (121), a change request including at least a data set ID and instructions to delete one of the one or more existing sets of data stored in the memory (123);
query the memory (123) for a set of data among the one or more existing sets of data having a data set ID matching the data set ID included in the change request; and
process the change request in accordance with the instructions
wherein the processor (122) is operable to process the change request by:
identifying, based on the data set ID, one or more mobile devices (130-1, 130-2,..., 130-n, 230, 330, 430, 530, 630) on which the existing set of data is stored; and
transmitting, to the one or more mobile devices (130-1, 130-2,..., 130-n, 230, 330, 430, 530, 630), a request to delete the existing set of data from the one or more mobile devices (130-1, 130-2,..., 130-n, 230, 330, 430, 530, 630), and
wherein the processor (122) is operable to delete the existing set of data from the one or more mobile devices (130-1, 130-2,..., 130-n, 230, 330, 430, 530, 630) by (1) queuing the instructions included in the change request for the one or more mobile devices (130-1, 130-2,..., 130-n, 230, 330, 430, 530, 630) from which the existing set of data is to be deleted; (2) receiving, from at least one of the one or more mobile devices (130-1, 130-2,..., 130-n, 230, 330, 430, 530, 630) from which the existing set of data is to be deleted, a pull request for the change to the existing set of data; and (3) transmitting the request to delete the existing set of data from the at least one of the mobile devices (130-1, 130-2,..., 130-n, 230, 330, 430, 530, 630).

2. The system according to Claim 1, wherein the existing set of data is to be deleted from a mobile wallet application (131-1, 131-2,..., 131-n) stored on the one or more mobile devices (130-1, 130-2,..., 130-n, 230, 330, 430, 530, 630).

3. The system according to Claim 1 or 2,
wherein the memory (123) is further operable to store one or more mobile device IDs associated with each data set ID, and
wherein the processor (122) is operable to identify the one or more mobile devices (130-1, 130-2,..., 130-n, 230, 330, 430, 530, 630) on which the existing set of data is stored by performing a query for the mobile device IDs associated with the data set ID of the existing set of data.

4. A method for managing sets of data, the method comprising steps of:
receiving, from one or more service provider systems (110-1, 110-2, ..., 110-n, 210, 310, 410, 510, 610) via an interface (121), a change request including at least a data set ID associated with an existing set of data, and instructions to delete one of the one or more existing sets of data stored on a memory (123);
querying the memory (123) for a set of data among the one or more existing sets of data having a data set ID matching the data set ID included in the change request; and
processing the change request in accordance with the instructions,
wherein the processing of the change request comprises steps of:
identifying, based on the data set ID, one or more mobile devices (130-1, 130-2,..., 130-n, 230, 330, 430, 530, 630) on which the existing set of data is stored; and
transmitting, to the one or more mobile devices (130-1, 130-2,..., 130-n, 230, 330, 430, 530, 630), a request to delete the existing set of data from the one or more mobile devices (130-1, 130-2,..., 130-n, 230, 330, 430, 530, 630),
wherein the deleting of the existing set of data comprises steps of:
queuing the instructions included in the change request for the one or more mobile devices (130-1, 130-2,..., 130-n, 230, 330, 430, 530, 630) from which the existing set of data is to be deleted;
receiving, from at least one of the one or more mobile devices (130-1, 130-2,..., 130-n, 230, 330, 430, 530, 630) from which the existing set of data is to be deleted, a pull request for the change to the existing set of data; and transmitting the request to delete the existing set of data from the at least one of the mobile devices (130-1, 130-2,..., 130-n, 230, 330, 430, 530, 630).

5. The method according to Claim 4, wherein the existing set of data is to be deleted from a mobile wallet application (131-1, 131-2,..., 131-n) stored on the one or more mobile devices (130-1, 130-2,..., 130-n, 230, 330, 430, 530, 630).

6. The method according to Claim 4 to 5, wherein the memory (123) is further operable to store one or more mobile device IDs associated with each data set ID, and
the method further comprising a step of identifying the one or more mobile devices (130-1, 130-2,..., 130-n, 230, 330, 430, 530, 630) on which the existing set of data is stored by performing a query for the mobile device IDs associated with the data set ID of the existing set of data.

7. A non-transitory computer-readable medium having stored thereon sequences of instructions for causing one or more processors to:
receive from one or more service provider systems (110-1, 110-2, ..., 110-n, 210, 310, 410, 510, 610) via an interface (121) a change request including at least a data set ID associated with an existing set of data, and instructions to delete one of the one or more existing sets of data stored on a memory (123);
query the memory (123) for a set of data among the one or more existing sets of data having a data set ID matching the data set ID included in the change request;
process the change request in accordance with the instructions,
wherein the sequences of instructions cause the one or more processors to process the change request by:
identifying, based on the data set ID, one or more mobile devices (130-1, 130-2,..., 130-n, 230, 330, 430, 530, 630) on which the existing set of data is stored; and
transmitting, to the one or more mobile devices (130-1, 130-2,..., 130-n, 230, 330, 430, 530, 630), a request to delete the existing set of data from the one or more mobile devices (130-1, 130-2,..., 130-n, 230, 330, 430, 530, 630),
wherein the sequences of instructions cause the one or more processors to delete the existing set of data from the one or more mobile devices (130-1, 130-2,..., 130-n, 230, 330, 430, 530, 630) by:
queuing the instructions included in the change request for the one or more mobile devices (130-1, 130-2,..., 130-n, 230, 330, 430, 530, 630) from which the existing set of data is to be deleted;
receiving, from at least one of the one or more mobile devices (130-1, 130-2,..., 130-n, 230, 330, 430, 530, 630) from which the existing set of data is to be deleted, a pull request for the change to the existing set of data; and
transmitting the request to delete the existing set of data from the at least one of the mobile devices (130-1, 130-2,..., 130-n, 230, 330, 430, 530, 630).

8. The non-transitory computer-readable medium according to Claim 7, wherein the existing set of data is to be deleted from a mobile wallet application (131-1, 131-2,..., 131-n) stored on the one or more mobile devices (130-1, 130-2,..., 130-n, 230, 330, 430, 530, 630).

9. The non-transitory computer-readable medium according to Claim 7 or 8,
wherein the memory is further operable to store one or more mobile device IDs associated with each data set ID, and
wherein the sequences of instructions cause the one or more processors to identify the one or more mobile devices (130-1, 130-2,..., 130-n, 230, 330, 430, 530, 630) on which the existing set of data is stored by performing a query for the mobile device IDs associated with the data set ID of the existing set of data.

## Patentansprüche

1. System zum Verwalten von Daten, das System (100) umfassend:
einen Speicher (123), der in der Lage ist, einen oder mehrere Datensätze zu speichern, wobei jeder vorhandene Datensatz mit einem oder mehreren vorhandenen Datenattributen und einer zugehörigen Datensatzkennung verknüpft ist,
eine Schnittstelle (121) zum Kommunizieren mit einem oder mehreren Dienstanbietersystemen (110-1, 110-2, ..., 110-n, 210, 310, 410, 510, 610), und
einen Prozessor (122), der kommunikativ mit dem Speicher (123) und der Schnittstelle (121) verbunden ist, wobei der Prozessor in der Lage ist:
Von dem einen oder den mehreren Dienstanbietersystemen (110-1, 110-2,..., 110-n, 210, 310, 410, 510, 610) über die Schnittstelle (121) eine Änderungsanforderung zu empfangen, die mindestens eine Datensatzkennung und Anweisungen zum Löschen von einem des einen oder der mehreren vorhandenen Datensätzen beinhaltet, die im Speicher (123) gespeichert sind;
Den Speicher (123) nach einem Datensatz aus dem einen oder den mehreren Datensätzen mit einer Datensatzkennung abzufragen, die der in der Änderungsanforderung beinhalteten Datensatzkennung entspricht; und
die Änderungsanforderung gemäß den Anweisungen zu verarbeiten,
wobei der Prozessor (122) in der Lage ist, die Änderungsanforderung zu verarbeiten durch:
Identifizieren, basierend auf der Datensatzkennung, von einem oder mehreren mobilen Geräten (130-1, 130-2,..., 130-n, 230, 330, 430, 530, 630), auf denen der vorhandene Datensatz gespeichert ist; und
Senden, an das eine oder die mehreren mobilen Geräte (130-1, 130-2,..., 130-n, 230, 330, 430, 530, 630), einer Anforderung zum Löschen des vorhandenen Datensatzes von dem einen oder den mehreren mobilen Geräten (130-1, 130-2,..., 130-n, 230, 330, 430, 530, 630), und
wobei der Prozessor (122) in der Lage ist, den vorhandenen Datensatz von dem einen oder den mehreren mobilen Geräten (130-1, 130-2,..., 130-n, 230, 330, 430, 530, 630) zu löschen durch (1) Hinzufügen der Anweisungen, die in der Änderungsanforderung für das eine oder die mehreren mobile Geräte (130-1, 130-2,..., 130-n, 230, 330, 430, 530, 630) enthalten sind, von denen der vorhandene Datensatz gelöscht werden soll, zu einer Warteschlange; (2) Empfangen, von mindestens dem einen oder den mehreren mobilen Geräten (130-1, 130-2,..., 130-n, 230, 330, 430, 530, 630), von denen der vorhandene Datensatz gelöscht werden soll, einer Pull-Anforderung zum Ändern des vorhandenen Datensatzes; und (3) Senden der Anforderung zum Löschen des vorhandenen Datensatzes von dem mindestens einen der mobilen Geräte (130-1, 130-2,..., 130-n, 230, 330, 430, 530, 630).

2. System nach Anspruch 1, wobei der vorhandene Datensatz von einer mobilen Wallet-Anwendung (131-1, 131-2,..., 131-n) gelöscht werden soll, die auf einem oder mehreren mobilen Geräten (130-1, 130-2,..., 130-n, 230, 330, 430, 530, 630) gespeichert ist.

3. System nach Anspruch 1 oder 2,
wobei der Speicher (123) ferner in der Lage ist, eine oder mehrere Mobilgerätekennungen zu speichern, die mit der jeweiligen Datensatzkennung verknüpft sind, und
wobei der Prozessor (122) in der Lage ist, das eine oder die mehreren mobilen Geräte (130-1, 130-2,..., 130-n, 230, 330, 430, 530, 630) zu identifizieren, auf denen der vorhandene Datensatz gespeichert ist, indem eine Abfrage nach den Mobilgerätekennungen durchgeführt wird, die mit der Datensatzkennung des vorhandenen Datensatzes verknüpft sind.

4. Verfahren zum Verwalten von Datensätzen, das Verfahren folgende Schritte umfassend:
Empfangen, von einem oder mehreren Dienstanbietersystemen (110-1, 110-2,..., 110-n, 210, 310, 410, 510, 610) über eine Schnittstelle (121), einer Änderungsanforderung, die mindestens eine Datensatzkennung, die mit einem vorhandenen Datensatz verknüpft ist, und Anweisungen zum Löschen von einem des einen oder der mehreren vorhandenen Datensätzen beinhaltet, die in einem Speicher (123) gespeichert sind;
Abfragen des Speichers (123) nach einem Datensatz aus dem einen oder den mehreren Datensätzen mit einer Datensatzkennung, die der in der Änderungsanforderung enthaltenen Datensatzkennung entspricht; und
Verarbeiten der Änderungsanforderung gemäß den Anweisungen,
wobei das Verarbeiten der Änderungsanforderung folgende Schritte umfasst:
Identifizieren, basierend auf der Datensatzkennung, von einem oder mehreren mobilen Geräten (130-1, 130-2,..., 130-n, 230, 330, 430, 530, 630), auf denen der vorhandene Datensatz gespeichert ist; und
Senden, an das eine oder die mehreren mobilen Geräte (130-1, 130-2,..., 130-n, 230, 330, 430, 530, 630), einer Anforderung zum Löschen des vorhandenen Datensatzes von dem einen oder den mehreren mobilen Geräten (130-1, 130-2,..., 130-n, 230, 330, 430, 530, 630),
wobei das Löschen des vorhandenen Datensatzes folgende Schritte umfasst:
Hinzufügen der Anweisungen, die in der Änderungsanforderung für den einen oder den mehreren mobilen Geräten (130-1, 130-2,..., 130-n, 230, 330, 430, 530, 630) enthalten sind, von denen der vorhandene Datensatz gelöscht werden soll, zu einer Warteschlange;
Empfangen, von mindestens einem des einen oder der mehreren mobilen Geräten (130-1, 130-2,..., 130-n, 230, 330, 430, 530, 630), von denen der vorhandene Datensatz gelöscht werden soll, einer Pull-Anforderung zum Ändern des vorhandenen Datensatzes; und Senden der Anforderung zum Löschen des vorhandenen Datensatzes von dem mindestens einen der mobilen Geräte (130-1, 130-2,..., 130-n, 230, 330, 430, 530, 630).

5. Verfahren nach Anspruch 4, wobei der vorhandene Datensatz von einer mobilen Wallet-Anwendung (131-1, 131-2,..., 131-n) gelöscht werden soll, die auf dem oder den mehreren mobilen Geräten (130-1, 130-2,..., 130-n, 230, 330, 430, 530, 630) gespeichert ist.

6. Verfahren nach den Ansprüchen 4 bis 5, wobei der Speicher (123) ferner in der Lage ist, eine oder mehrere Mobilgerätekennungen zu speichern, die mit jeder Datensatzkennung verknüpft sind, und
das Verfahren ferner einen Schritt zum Identifizieren des einen oder der mehreren mobilen Geräte (130-1, 130-2,..., 130-n, 230, 330, 430, 530, 630) umfasst, auf denen der vorhandene Datensatz gespeichert ist, indem eine Abfrage nach den Mobilgerätekennungen durchgeführt wird, die mit der Datensatzkennung des vorhandenen Datensatzes verknüpft sind.

7. Nicht flüchtiges, computerlesbares Medium, auf dem Sequenzen von Anweisungen gespeichert sind, die einen oder mehrere Prozessoren veranlassen:
von einem oder mehreren Dienstanbietersystemen (110-1, 110-2,..., 110-n, 210, 310, 410, 510, 610) über eine Oberfläche (121) eine Änderungsanforderung zu empfangen, die mindestens eine Datensatzkennung, die mit einem vorhandenen Datensatz verknüpft ist, und Anweisungen zum Löschen von einem des einen oder der mehreren vorhandenen Datensätzen beinhaltet, die in einem Speicher (123) gespeichert sind;
den Speicher (123) nach einem Datensatz aus dem einen oder den mehreren Datensätzen mit einer Datensatzkennung abzufragen, die der in der Änderungsanforderung beinhalteten Datensatzkennung entspricht;
die Änderungsanforderung gemäß den Anweisungen zu verarbeiten,
wobei die Sequenzen von Anweisungen den einen oder die mehreren Prozessoren veranlassen, die Änderungsanforderung zu verarbeiten durch:
Identifizieren, basierend auf der Datensatzkennung, von einem oder mehreren mobilen Geräten (130-1, 130-2,..., 130-n, 230, 330, 430, 530, 630), auf denen der vorhandene Datensatz gespeichert ist; und
Senden, an das eine oder die mehreren mobilen Geräte (130-1, 130-2,..., 130-n, 230, 330, 430, 530, 630), einer Anforderung zum Löschen des vorhandenen Datensatzes von dem einen oder den mehreren mobilen Geräten (130-1, 130-2,..., 130-n, 230, 330, 430, 530, 630),
wobei die Sequenzen von Anweisungen den einen oder die mehreren Prozessoren veranlassen, den vorhandenen Datensatz von dem einen oder den mehreren mobilen Geräten (130-1, 130-2,..., 130-n, 230, 330, 430, 530, 630) zu löschen durch:
Hinzufügen der Anweisungen, die in der Änderungsanforderung für den einen oder den mehreren mobilen Geräten (130-1, 130-2,..., 130-n, 230, 330, 430, 530, 630) enthalten sind, von denen der vorhandene Datensatz gelöscht werden soll, zu einer Warteschlange;
Empfangen, von mindestens dem einen oder den mehreren mobilen Geräten (130-1, 130-2,..., 130-n, 230, 330, 430, 530, 630), von denen der vorhandene Datensatz gelöscht werden soll, einer Pull-Anforderung zum Ändern des vorhandenen Datensatzes; und
Senden der Anforderung zum Löschen des vorhandenen Datensatzes von dem mindestens einen der mobilen Geräte (130-1, 130-2,..., 130-n, 230, 330, 430, 530, 630).

8. Nicht flüchtiges, computerlesbares Medium nach Anspruch 7, wobei der vorhandene Datensatz von einer mobilen Wallet-Anwendung (131-1, 131-2,..., 131-n) gelöscht werden soll, die auf dem oder den mehreren mobilen Geräten (130-1, 130-2,..., 130-n, 230, 330, 430, 530, 630) gespeichert ist.

9. Nicht flüchtiges computerlesbares Speichermedium nach Anspruch 7 oder Anspruch 8,
wobei der Speicher ferner in der Lage ist, eine oder mehrere Mobilgerätekennungen zu speichern, die mit der jeweiligen Datensatzkennung verknüpft sind, und
wobei die Sequenzen von Anweisungen den einen oder die mehreren Prozessoren veranlassen, das eine oder die mehreren mobilen Geräte (130-1, 130-2,..., 130-n, 230, 330, 430, 530, 630) zu identifizieren, auf denen der vorhandene Datensatz gespeichert ist, indem eine Abfrage nach den Mobilgerätekennungen durchgeführt wird, die mit der Datensatzkennung des vorhandenen Datensatzes verknüpft sind.

## Revendications

1. Système pour la gestion de données, le système (100) comprenant :
une mémoire (123) opérable pour stocker un ou plusieurs ensembles de données existants, chaque ensemble de données existant étant associée à un ou plusieurs attributs de données existants et à un identificateur ID d'ensemble de données correspondant,
une interface (121) pour la communication avec un ou plusieurs systèmes de fournisseurs de service (110-1, 110-2,..., 110-n, 210, 310, 410, 510, 610), et
un processeur (122) couplé de manière communicative à la mémoire (123) et à l'interface (121), le processeur étant opérable pour :
recevoir, à partir de l'un ou plusieurs systèmes de fournisseurs de services (110-1, 110-2,..., 110-n, 210, 310, 410, 510, 610) par le biais de l'interface (121), une demande de changement incluant au moins un ID d'ensemble de données et des instructions pour effacer un de l'un ou plusieurs ensembles de données existants stockés dans la mémoire (123) ;
interroger de la mémoire (123) sur un ensemble de données parmi l'un ou plusieurs ensembles de données existants ayant un ID d'ensemble de données correspondant à l'ID d'ensemble de données dans la demande de changement ; et
traiter de la demande de changement conformément aux instructions
où le processeur (122) est opérable pour traiter la demande de changement :
en identifiant, sur la base de l'ID d'ensemble de données, un ou plusieurs dispositifs mobiles (130-1, 130-2,..., 130-n, 230, 330, 430, 530, 630) sur lesquels l'ensemble de données existant est stocké ; et
en transmettant, vers l'un ou plusieurs dispositifs mobiles (130-1, 130-2,..., 130-n, 230, 330, 430, 530, 630), une demande d'effacer l'ensemble de données existant de l'un ou plusieurs dispositifs mobiles (130-1, 130-2,..., 130-n, 230, 330, 430, 530, 630), et
où le processeur (122) est opérable pour effacer l'ensemble de données existant de l'un ou plusieurs dispositifs mobiles (130-1, 130-2,..., 130-n, 230, 330, 430, 530, 630) (1) en mettant dans la file d'attente les instructions inclues dans la demande de changement pour l'un ou plusieurs dispositifs mobiles (130-1, 130-2,..., 130-n, 230, 330, 430, 530, 630) desquels l'ensemble de données existant doit être effacé ; (2) en recevant, à partir de l'au moins un de l'un ou plusieurs dispositifs mobiles (130-1, 130-2,..., 130-n, 230, 330, 430, 530, 630) desquels l'ensemble de données existant doit être effacé, une demande d'extraction pour le changement de l'ensemble de données existant ; et (3) en transmettant la demande d'effacer l'ensemble de données existant de l'au moins un des dispositifs mobiles (130-1, 130-2,..., 130-n, 230, 330, 430, 530, 630).

2. Système selon la revendication 1, dans lequel l'ensemble de données existant est effacé d'une application portefeuille mobile (131-1, 131-2,..., 131-n) stockée dans l'un ou plusieurs dispositifs mobiles (130-1, 130-2,..., 130-n, 230, 330, 430, 530, 630).

3. Système selon la revendication 1 ou 2,
dans lequel la mémoire (123) est opérable en outre pour stocker un ou plusieurs ID de dispositifs mobiles associés à chaque ID d'ensemble de données, et
dans lequel le processeur (122) est opérable pour identifier l'un ou plusieurs dispositifs mobiles (130-1, 130-2,..., 130-n, 230, 330, 430, 530, 630) dans lesquels l'ensemble de données existant est stocké en exécutant une interrogation sur les ID de dispositifs mobiles associés à l'ID d'ensemble de données de l'ensemble de données existant.

4. Procédé pour la gestion d'ensembles de données, le procédé comprenant les étapes consistant de :
la réception, à partir d'un ou plusieurs systèmes de fournisseurs de services (110-1, 110-2, ..., 110-n, 210, 310, 410, 510, 610) par le biais d'une interface (121), d'une demande de changement incluant au moins un ID d'ensemble de données associé à un ensemble de données existant, et des instructions pour effacer un de l'un ou plusieurs ensembles de données existants stockés dans une mémoire (123) ;
l'interrogation de la mémoire (123) au sujet d'un ensemble de données parmi l'un ou plusieurs ensembles de données existants ayant un ID d'ensemble de données correspondant à l'ID d'ensemble de données dans la demande de changement ; et
le traitement de la demande de changement conformément aux instructions,
où le traitement de la demande de changement comprend les étapes de :
l'identification, sur la base de l'ID d'ensemble de données, d'un ou plusieurs dispositifs mobiles (130-1, 130-2,..., 130-n, 230, 330, 430, 530, 630) sur lesquels l'ensemble de données existant est stocké ; et
la transmission, vers l'un ou plusieurs dispositifs mobiles (130-1, 130-2,..., 130-n, 230, 330, 430, 530, 630), d'une demande d'effacer l'ensemble de données existant de l'un ou plusieurs dispositifs mobiles (130-1, 130-2,..., 130-n, 230, 330, 430, 530, 630),
où l'effacement de l'ensemble de données existant comprend les étapes de :
la mise dans la file d'attente des instructions inclues dans la demande de changement pour l'un ou plusieurs dispositifs mobiles (130-1, 130-2,..., 130-n, 230, 330, 430, 530, 630) desquels l'ensemble de données existant doit être effacé ;
la réception, à partir d'au moins un de l'un ou plusieurs dispositifs mobiles (130-1, 130-2,..., 130-n, 230, 330, 430, 530, 630) desquels l'ensemble de données existant doit être effacé, d'une demande d'extraction pour le changement de l'ensemble de données existant ; et la transmission de la demande d'effacer l'ensemble de données existant de l'au moins un des dispositifs mobiles (130-1, 130-2,..., 130-n, 230, 330, 430, 530, 630).

5. Procédé selon la revendication 4, dans lequel l'ensemble de données existant est effacé d'une application portefeuille mobile (131-1, 131-2,..., 131-n) stockée dans l'un ou plusieurs dispositifs mobiles (130-1, 130-2,..., 130-n, 230, 330, 430, 530, 630).

6. Procédé selon la revendication 4 à 5, dans lequel la mémoire (123) est opérable en outre pour stocker un ou plusieurs ID de dispositifs mobiles associés à chaque ID d'ensemble de données, et
le procédé comprenant, en outre, l'étape d'identification de l'un ou plusieurs dispositifs mobiles (130-1, 130-2,..., 130-n, 230, 330, 430, 530, 630) dans lesquels l'ensemble de données existant est stocké en exécutant une interrogation sur les ID de dispositifs mobiles associés à l'ID d'ensemble de données de l'ensemble de données existant.

7. Support non transitoire lisible par ordinateur ayant stocké en lui des séquences d'instructions pour provoquer un ou plusieurs processeurs pour :
recevoir, à partir d'un ou plusieurs systèmes fournisseurs de services (110-1, 110-2, ..., 110-n, 210, 310, 410, 510, 610) par le biais d'une interface (121), une demande de changement incluant au moins un ID d'ensemble de données associé à un ensemble de données existant, et des instructions pour effacer un de l'un ou plusieurs ensembles de données existants stockés dans une mémoire (123) ;
interroger la mémoire (123) au sujet d'un ensemble de données parmi l'un ou plusieurs ensembles de données existants ayant un ID d'ensemble de données correspondant à l'ID d'ensemble de données dans la demande de changement ;
traiter la demande de changement conformément aux instructions,
où les séquences d'instructions provoquent l'un ou plusieurs processeurs pour traiter la demande de changement :
en identifiant, sur la base de l'ID d'ensemble de données, un ou plusieurs dispositifs mobiles (130-1, 130-2,..., 130-n, 230, 330, 430, 530, 630) sur lesquels l'ensemble de données existant est stocké ; et
en transmettant, vers l'un ou plusieurs dispositifs mobiles (130-1, 130-2,..., 130-n, 230, 330, 430, 530, 630), une demande d'effacer l'ensemble de données existant de l'un ou plusieurs dispositifs mobiles (130-1, 130-2,..., 130-n, 230, 330, 430, 530, 630),
où les séquences d'instructions provoquent l'un ou plusieurs processeurs pour effacer l'ensemble de données existant de l'un ou plusieurs dispositifs mobiles (130-1, 130-2,..., 130-n, 230, 330, 430, 530, 630) :
en mettant dans la file d'attente les instructions inclues dans la demande de changement pour l'un ou plusieurs dispositifs mobiles (130-1, 130-2,..., 130-n, 230, 330, 430, 530, 630) desquels l'ensemble de données existant doit être effacé ;
en recevant, à partir d'au moins un de l'un ou plusieurs dispositifs mobiles (130-1, 130-2,..., 130-n, 230, 330, 430, 530, 630) desquels l'ensemble de données existant doit être effacé, une demande d'extraction pour le changement de l'ensemble de données existant ; et
en transmettant la demande d'effacer l'ensemble de données existant de l'au moins un des dispositifs mobiles (130-1, 130-2,..., 130-n, 230, 330, 430, 530, 630) .

8. Support non transitoire lisible par ordinateur selon la revendication 7, dans lequel l'ensemble de données existant doit être effacé d'une application portefeuille mobile (131-1, 131-2,..., 131-n) stockée dans l'un ou plusieurs dispositifs mobiles (130-1, 130-2,..., 130-n, 230, 330, 430, 530, 630).

9. Support non transitoire lisible par ordinateur selon la revendication 7 ou 8,
dans lequel la mémoire est opérable en outre pour stocker un ou plusieurs ID de dispositifs mobiles associés à chaque ID d'ensemble de données, et
dans lequel les séquences d'instructions provoquent l'un ou plusieurs processeurs pour identifier l'un ou plusieurs dispositifs mobiles (130-1, 130-2,..., 130-n, 230, 330, 430, 530, 630) dans lesquels l'ensemble de données existant est stocké en exécutant une interrogation sur les ID de dispositifs mobiles associés à l'ID d'ensemble de données de l'ensemble de données existant.
